# EUROPÄISCHE PATENTSCHRIFT

(11) **EP 2 408 835 B1**
(45) Veröffentlichungstag und Bekanntmachung des Hinweises auf die Patenterteilung: **15.01.2014**
(21) Anmeldenummer: 10708997.1
(22) Anmeldetag: 16.03.2010
(51) Int. Cl.: C08G 18/36, C08G 18/48, C08G 18/50, C08G 18/66, C08J 9/14

(54) **VERFAHREN ZUR HERSTELLUNG VON POLYURETHAN-HARTSCHAUMSTOFFEN**
METHOD FOR PRODUCING RIGID POLYURETHANE FOAMS
PROCÉDÉ DE FABRICATION DE MOUSSES RIGIDES DE POLYURÉTHANE

(30) Priorität: 18.03.2009 EP 09155438
(43) Veröffentlichungstag der Anmeldung: 25.01.2012
(73) Patentinhaber: BASF SE, 67056 Ludwigshafen (DE)
(72) Erfinder: TOMOVIC, Zeljko, 49448 Lemförde (DE); JACOBMEIER, Olaf, 32312 Lübbecke (DE); HENSIEK, Rainer, 49328 Melle (DE); KAMPF, Gunnar, 32351 Stemwede-Haldem (DE)
(86) Internationale Anmeldenummer: PCT/EP2010/053392
(87) Internationale Veröffentlichungsnummer: WO 2010/106067

(56) Entgegenhaltungen:
- EP-A1- 0 728 783
- EP-A1- 0 826 708
- WO-A1-2004/065447

## Beschreibung

Gegenstand der Erfindung ist ein Verfahren zur Herstellung von Polyurethan-Hartschaumstoffen.

Polyurethan-Hartschaumstoffe sind seit langem bekannt und vielfach beschrieben. Der Einsatz der Polyurethan- Hartschaumstoffe erfolgt vorwiegend zur Wärmeisolation, beispielsweise in Kältegeräten, Transportmitteln oder Gebäuden sowie zur Herstellung von Bauelementen, insbesondere Sandwich-Elementen.

Ein wesentliches Einsatzgebiet der Polyurethan-Hartschaumstoffe sind Verbundelemente. Die Herstellung von Verbundelementen aus insbesondere metallischen Deckschichten und einem Kern aus Schaumstoffen auf Isocyanatbasis, zumeist Polyurethan- (PUR) oder Polyisocyanurat-(PIR) Schaumstoffen, häufig auch als Sandwichelemente bezeichnet, auf kontinuierlich arbeitenden Doppelbandanlagen wird gegenwärtig in großem Umfang praktiziert. Neben Sandwichelementen zur Kühlhausisolierung gewinnen Elemente mit farbigen Deckschichten zur Gestaltung von Fassaden verschiedenster Gebäude immer mehr an Bedeutung. Als Deckschichten werden dabei neben beschichteten Stahlblechen auch Edelstahl-, Kupfer- oder Aluminiumbleche eingesetzt.

Es ist wichtig, dass die Polyurethan-Hartschaumstoffe die Hohlräume gleichmäßig und lunkerfrei ausfüllen, so dass durch möglichst gute Verbindung mit den Deckschichten eine stabile Konstruktion erzeugt wird, die für eine gute thermische Isolation sorgt. Um Schaumfehlstellen zu verhindern, muss hierzu das schaumfähige PU-Reaktionsgemisch innerhalb einer kurzen Zeit in den zu isolierenden Hohlraum eingeführt werden. Zum Ausschäumen derartiger Gegenstände werden üblicherweise Niederdruck- oder vorzugsweise Hochdruckmaschinen eingesetzt.

Eine zusammenfassende Übersicht über die Herstellung von Polyurethan-Hartschaumstoffen und ihre Verwendung als Deck- oder Kernschicht in Verbundelementen sowie ihre Anwendung als Dämmschicht in der Kühl- oder Heizungstechnik findet sich z.B. in "Polyurethane", Kunststoff-Handbuch, Band 7, 3. Auflage 1993, herausgegeben von Dr. Günter Oertel, Carl-Hanser-Verlag, München/Wien.

Geeignete Polyurethan-Hartschaumstoffe können in bekannter Weise durch Umsetzung von organischen Polyisocyanaten mit einer oder mehreren Verbindungen mit mindestens zwei reaktiven Wasserstoffatomen in Gegenwart von Treibmitteln, Katalysatoren und gegebenenfalls Hilfsmitteln und/oder Zusatzstoffen hergestellt werden. Als Verbindungen mit mindestens zwei mit Isocyanatgruppen reaktiven Wasserstoffatomen werden bei der Herstellung der Polyurethane vorzugsweise Polyetheralkohole und/oder Polyesteralkohole eingesetzt. Die Auswahl der Polyole erfolgt insbesondere unter Berücksichtigung der Kosten- und der gewünschten Anwendungseigenschaften (z. B. EP-A-1632511, US-B-6495722, WO 2006/108833).

In der EP-A-728783 wird ein Verfahren zur Herstellung von Polyurethan-Hartschaumstoffen durch Umsetzung von organischen Polyisocyanaten mit einem Gemisch aus mindestens drei verschiedenen höhermolekularen Polyetheralkoholen b1) bis b3) verschiedener Funktionalität und eines OH-gruppenhaltigen Fettsäureesters b4) (8 bis 20 Gew.-Teile), insbesondere Rizinusöl, in Gegenwart von Treibmitteln und Katalysatoren beschrieben. Der Polyetheralkohol b1) mit einem Anteil von 20 bis 60 Gew.-Teilen besitzt Funktionalitäten von 6 bis 8 und mittlere Äquivalentmassen von 125 bis 200. Polyetheralkohol b2) mit einem Anteil von 5 bis 30 Gew.-Teilen basiert auf aliphatischen Aminen mit Funktionalitäten von 3 bis 4 und mittleren Äquivalentmassen von 70 bis 130. Polyetheralkohol b3) mit einem Anteil von 3 bis 25 Gew.-Teilen besitzt Funktionalitäten von 2 bis 3 und mittlere Äquivalentmassen von 67 bis 250. Die Polyolkomponente hat vorzugsweise eine mittlere Hydroxylzahl von 350 bis 390 mg KOH/g.

Die Oberflächeneigenschaften der bekannten Polyurethan-Hartschaumstoffe sind weiterhin, insbesondere bei der Herstellung von Verbundelementen, verbesserungsbedürftig, da hiervon auch die Haftung der Deckschichten am Schaum wesentlich beeinflusst wird. Auch bei der Herstellung von Schaumstoffen nach dem Sprühschaumverfahren ist eine gute Oberfläche von großer Bedeutung.

Es ist daher die Aufgabe der Erfindung ein Verfahren zur Herstellung von Polyurethan-Hartschaumstoffen zu entwickeln, das zu Schäumen mit verbesserter Haftung und Oberflächenqualität führt, deren Polyolkomponente eine geringe Viskosität aufweist und somit gute Verarbeitungseigenschaften, insbesondere eine gute Fließfähigkeit und Aushärtung, besitzt.

Die Aufgabe konnte überraschenderweise gelöst werden durch ein Verfahren zur Herstellung von Polyurethan-Hartschaumstoffen, in dem als Polyolkomponente ein Gemisch aus
einem oder mehreren hochfunktionellen Polyetheralkoholen mit Funktionalitäten von 3,7 bis 5,2 und einer Hydroxylzahl von 370 bis 500 mg KOH/g,
einem oder mehreren Polyetheralkoholen auf Basis aliphatischer und/oder aromatischer Amine mit Funktionalitäten von 3 bis 4 und einer Hydroxylzahl von 150 bis 500 mg KOH/g,
einem OH-Gruppen enthaltenden Fettsäureester und
einem oder mehreren niedermolekularen Kettenverlängerungs- und/oder Vernetzungsmitteln mit Funktionalitäten von 2 bis 3 und einem Molekulargewicht M_{w} von < 400 g/mol
eingesetzt wird.

Gegenstand der Erfindung ist ein Verfahren zur Herstellung von Polyurethan-Hartschaumstoffen durch Umsetzung von
a) organischen Polyisocyanaten mit
b) Verbindungen mit mindestens zwei mit Isocycanatgruppen reaktiven Wasserstoffatomen in Anwesenheit von
c) Treibmitteln,
d) Katalysatoren, sowie gegebenenfalls
e) Hilfsmitteln und Zusatzstoffen,
dadurch gekennzeichnet, dass als Komponente b) ein Gemisch aus
b1) einem oder mehreren hochfunktionellen Polyetheralkoholen mit Funktionalitäten von 3,7 bis 5,2 und einer Hydroxylzahl von 370 bis 500mg KOH/g,
b2) einem oder mehreren Polyetheralkoholen auf Basis aromatischer Amine mit Funktionalitäten von 3 bis 4 und einer Hydroxylzahl von 150 bis 500 mg KOH/g,
b3) mindestens einem OH-Gruppen enthaltenden Fettsäureester und gegebenenfalls
b4) einem oder mehreren niedermolekularen Kettenverlängerungs- und/oder Vemetzungsmitteln mit Funktionalitäten von 2 bis 3 und einem Molekulargewicht M_{w} von < 400 g/mol
eingesetzt wird.

Die erfindungsgemäß verwendete Polyolkomponente b) hat eine mittlere Hydroxylzahl von 400 bis 550 mg KOH/g.

Die Polyolkomponente b) kann auch Katalysatoren, Stabilisatoren sowie übliche Hilfsmittel und Zusatzstoffe enthalten.

Gegenstand der Erfindung sind weiterhin Polyurethan-Hartschaumstoffe, hergestellt nach dem erfindungsgemäßen Verfahren.

Die Polyolkomponente (b) besteht aus einem Gemisch aus
b1) 20 bis 70 Gew.-Teilen, insbesondere 20 bis 60 Gew.-Teilen, eines oder mehrerer hochfunktioneller Polyetheralkohole mit Funktionalitäten von 3,7 bis 5,2 und einer Hydroxylzahl von 370 bis 500 mg KOH/g,
b2) 5 bis 30 Gew.-Teilen, insbesondere 5 bis 25 Gew.-Teilen. eines oder mehrerer Polyetheralkohole auf Basis aromatischer Amine mit Funktionalitäten von 3 bis 4 und einer Hydroxylzahl von 150 bis 500 mg KOH/g,
b3) 5 bis 20 Gew.-Teilen, insbesondere 5 bis 20 Gew.-Teilen, eines OH-Gruppen enthaltenden Fettsäureesters und gegebenenfalls
b4) 1 bis 20 Gew.-Teilen, insbesondere 2 bis 10 Gew.-Teilen, eines oder mehrerer niedermolekularer Kettenverlängerungs- und/oder Vernetzungsmittel mit Funktionalitäten von 2 bis 3 und einem Molekulargewicht M_{w} von < 400 g/mol.

Als Ester aus Glyzerin und OH-Gruppen enthaltenden Fettsäuren b3) wird insbesondere Rizinusöl eingesetzt.

Die Bestimmung der Hydroxylzahl erfolgt gemäß der DIN 53240.

Zu den einzelnen Komponenten, die im erfindungsgemäßen Verfahren eingesetzt werden, ist folgendes zu sagen:
a) Als organische Polyisocyanate kommen die an sich bekannten aliphatischen, cycloaliphatischen, araliphatischen und vorzugsweise aromatischen mehrwertigen Isocyanate in Frage.

Im Einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-diisocyanat-1,4, 2-Methyl-pentamethylen-diisocyanat-1,5, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophorondiisocyanat), 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische, und vorzugsweise aromatische Di- und Polyisocyanate, wie z.B. 2,4- und 2,6-Toluylen-diisocyanat und die entsprechenden Isomerengemische, 4,4'-, 2,4'- und 2,2'-Diphenylmethan-diisocyanat und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenylpolymethylenpolyisocyanaten (Roh-MDI) und Mischungen aus Roh-MDI und Toluylendiisocyanaten. Die organischen Di- und Polyisocyanate können einzeln oder in Form ihrer Mischungen eingesetzt werden.

Häufig werden auch so genannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate.

Im Einzelnen kommen beispielsweise in Betracht: Urethangruppen enthaltende organische, vorzugsweise aromatische Polyisocyanate mit NCO-Gehalten von 33,6 bis 15 Gew.-%, vorzugsweise von 31 bis 21 Gew.-%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 6000, insbesondere mit Molekulargewichten bis 1500, modifiziertes 4,4'-Diphenylmethan-diisocyanat, modifizierte 4,4'- und 2,4'-Diphenylmethan-diisocyanatmischungen, oder modifiziertes Roh-MDI oder 2,4- bzw. 2,6-Toluylen-diisocyanat, wobei als Di- bzw. Polyoxyalkylenglykole, die einzeln oder als Gemische eingesetzt werden können, beispielsweise genannt seien: Diethylen-, Dipropylenglykol, Polyoxyethylen-, Polyoxypropylen- und Polyoxypropylen-polyoxyethylen-glykole, -triole und/oder -tetrole. Geeignet sind auch NCO-Gruppen enthaltende Prepolymere mit NCO-Gehalten von 25 bis 3,5 Gew.-%, vorzugsweise von 21 bis 14 Gew.-%, bezogen auf das Gesamtgewicht, hergestellt aus den nachfolgend beschriebenen Polyester- und/oder vorzugsweise Polyetherpolyolen und 4,4'-Diphenylmethan-diisocyanat, Mischungen aus 2,4'- und 4,4'-Diphenylmethan-diisocyanat, 2,4- und/oder 2,6-Toluylen-diisocyanaten oder Roh-MDI.

Bewährt haben sich ferner flüssige, Carbodiimidgruppen und/oder Isocyanuratringe enthaltende Polyisocyanate mit NCO-Gehalten von 33,6 bis 15, vorzugsweise 31 bis 21 Gew.-%, bezogen auf das Gesamtgewicht, z.B. auf Basis von 4,4'-, 2,4'- und/oder 2,2'-Diphenylmethan-diisocyanat und/oder 2,4- und/oder 2,6-Toluylen-diisocyanat.

Die modifizierten Polyisocyanate können miteinander oder mit unmodifizierten organischen Polyisocyanaten wie z.B. 2,4'-, 4,4'-Diphenyl-methan-diisocyanat, Roh-MDI, 2,4- und/oder 2,6-Toluylen-diisocyanat gegebenenfalls gemischt werden.

Besonders bewährt haben sich als organische Polyisocyanate und kommen daher vorzugsweise zur Anwendung: Mischungen aus Toluylendiisocyanaten und Roh-MDI oder Mischungen aus modifizierten Urethangruppen enthaltenden organischen Polyisocyanaten mit einem NCO-Gehalt von 33,6 bis 15 Gew.-%, insbesondere solche auf Basis von Toluylendiisocyanaten, 4,4'-Diphenylmethan-diisocyanat, Diphenylmethan-diisocyanat-Isomerengemischen oder Roh-MDI und insbesondere Roh-MDI mit einem Diphenylmethan-diisocyanat-Isomerengehalt von 25 bis 80 Gew.-%, vorzugsweise von 30 bis 55 Gew.-%.
b) Die verwendeten Polyetherpolyole b1) und b2) werden nach bekannten Verfahren, beispielsweise durch anionische Polymerisation mit Alkalihydroxiden, wie z. B. Natrium- oder Kaliumhydroxid oder Alkalialkoholaten, wie z. B. Natriummethylat, Natrium- oder Kaliumethylat oder Kaliumisopropylat, als Katalysatoren und unter Zusatz mindestens eines Startermoleküls, das 2 bis 8, vorzugsweise 2 bis 6, reaktive Wasserstoffatome gebunden enthält, oder durch kationische Polymerisation mit Lewis-Säuren, wie Antimonpentachlorid, Borfluorid-Etherat u.a. oder Bleicherde, als Katalysatoren aus einem oder mehreren Alkylenoxiden mit 2 bis 4 Kohlenstoffatomen im Alkylenrest hergestellt. Weiterhin können auch Multimetallcyanidverbindungen, sogenannte DMC-Katalysatoren, eingesetzt werden. Auch tertiäre Amine können als Katalysator eingesetzt werden wie z.B. Triethylamin, Tributylamin, Trimethylamin, Dimethylethanolamin und/oder Dimethylcyclohexylamin.

Geeignete Alkylenoxide zur Herstellung der Polyetherpolyole b1) und b2) sind beispielsweise Ethylenoxid, 1,2-Propylenoxid, 1,3-Propylenoxid, 1,2- bzw. 2,3-Butylenoxid, Tetrahydrofuran, Styroloxid, vorzugsweise Ethylenoxid und 1,2-Propylenoxid. Die Alkylenoxide können einzeln, alternierend nacheinander oder als Mischungen verwendet werden.

Als Startermoleküle für die erfindungsgemäß verwendeten Polyetheralkohole kommen folgende Verbindungen in Betracht:
b1) Es werden insbesondere hydroxylgruppenhaltige hochfunktionelle Verbindungen, insbesondere Zucker, Stärke oder Lignin als Startsubstanzen verwendet. Von besonderer praktischer Bedeutung sind hierbei Glucose, Sucrose und Sorbitol. Da diese Verbindungen bei den üblichen Reaktionsbedingungen der Alkoxylierung in fester Form vorliegen, ist es allgemein üblich, diese Verbindungen gemeinsam mit Koinitiatoren zu alkoxylieren. Als Koinitiatoren eignen sich besonders Wasser und mehrfunktionelle niedere Alkohole, z.B. Glyzerin, Trimethylolpropan, Pentaerythrit, Ethylenglykol, Propylenglykol und deren Homologe.
b2) Als Startermoleküle mit mindestens zwei primären Aminogruppen im Molekül werden aromatische Di- und/oder Polyamine, beispielsweise Phenylendiamine, 2,3-, 2,4-, 3,4- und 2,6-Toluylendiamin (TDA) und 4,4'-, 2,4'- und 2,2'-Diamino-diphenylmethan eingesetzt.

Die Polyetheralkohole b1) haben Funktionalitäten von 3,7 bis 5,2 und eine Hydroxylzahl von 370-500 mg KOH/g.

Erfindungsgemäße Polyetheralkohole b2) sind Polyetheralkohole auf Basis aromatischer Amine mit Funktionalitäten von 3 bis 4 und einer Hydroxylzahl von 150 bis 500 mg KOH/g.

Weitere Angaben zu den verwendeten Polyetheralkoholen b1) und b2) sowie ihrer Herstellung finden sich beispielsweise im Kunststoffhandbuch, Band 7 "Polyurethane", herausgegeben von Günter Oertel, Carl-Hanser-Verlag München, 3. Auflage, 1993.

Die Polyolkomponente b) wird unter Mitverwendung von niedermolekularen Kettenverlängerungs- und/oder Vernetzungsmitteln b4) hergestellt. Als Kettenverlängerungs- und/oder Vernetzungsmittel b4) werden Diole und/oder Triole sowie Aminoalkohole mit Molekulargewichten kleiner als 400, vorzugsweise von 60 bis 300, verwendet.

In Betracht kommen beispielsweise aliphatische, cycloaliphatische und/oder araliphatische Diole mit 2 bis 14 Kohlenstoffatomen, vorzugsweise 2 bis 10 Kohlenstoffatomen, wie z.B. Ethylenglykol, 1,2-Propylenglykol, Propandiol-1,3, Decandiol-1,10, o-, m-, p-Dihydroxycyclohexan, Diethylenglykol, Dipropylenglykol, Butandiol-1,4, Hexandiol-1,6 und Bis-(2-hydroxy-ethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle sowie Aminoalkohole wie beispielsweise Diethanolamin und Triethanolamin.

Die Verwendung eines aliphatischen Diols mit 2-6 Kohlenstoffatomen, insbesondere von 1,2-Propylenglykol, als Kettenverlängerungsmittel b4) ist besonders bevorzugt.

Sofern zur Herstellung der Polyolkomponente b) die vorgenannten niedermolekularen Kettenverlängerungsmittel, Vernetzungsmittel oder Mischungen davon Anwendung finden, kommen diese zweckmäßigerweise in einer Menge von 1 bis 20 Gew.-%, vorzugsweise von 2 bis 10 Gew.-%, bezogen auf das Gewicht der Polyolverbindung (b) zum Einsatz.
c) Als Treibmittel für das erfindungsgemäße Verfahren können die zur Herstellung von Polyurethan-Hartschaumstoffen üblichen Treibmittel eingesetzt werden.

Als Treibmittel c) können neben Wasser noch zusätzlich allgemein bekannte chemisch und/oder physikalisch wirksame Verbindungen eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone, Acetale sowie anorganische und organische Verbindungen, die beim Erhitzen Stickstoff freisetzen, oder Mischungen daraus, beispielsweise (cyclo)aliphatische Kohlenwasserstoffe mit 4 bis 8 Kohlenstoffatomen, oder Fluorkohlenwasserstoffe, wie 1,1,1,3,3-Pentafluoropropan (HFC 245 fa), Trifluormethan, Difluormethane, 1,1,1,3,3-Pentafluorbutan (HFC 365 mfc), 1,1,1,2-Tetrafluorethan, Difluorethan und Heptafluorpropan .

Vorteilhafterweise werden als Treibmittel niedrigsiedende aliphatische Kohlenwasserstoffe, vorzugsweise n-Pentan und/oder iso-Pentan, insbesondere n-Pentan verwendet.

Das n-Pentan hat einen Siedepunkt von 36°C, iso-Pentan einen Siedepunkt von 28 °C. Damit liegen die Siedepunkte in einem für den Treibvorgang günstigen Bereich.

Da die als Treibmittel geeigneten aliphatischen Kohlenwasserstoffe brennbar und explosibel sind, müssen die Verschäumungsanlagen mit den entsprechenden Sicherheitseinrichtungen ausgestattet sein, wie sie auch beim Einsatz von Cyclopentan als Treibmittel notwendig sind.

Es ist vorteilhaft, die aliphatischen Kohlenwasserstoffe gemeinsam mit Wasser als Treibmittel einzusetzen. Die eingesetzte Menge an aliphatischen Kohlenwasserstoffen beträgt 2 bis 25 Gew.-%, vorzugsweise 5 bis 15 Gew.-%, bezogen auf die Komponente b). Der Anteil des Wassers richtet sich nach der angestrebten Rohdichte des Polyurethan-Hartschaumstoffes.
d) Als Katalysatoren (d) zur Herstellung der Polyurethan-Hartschaumstoffe werden insbesondere Verbindungen verwendet, die die Reaktion der reaktive Wasserstoffatome, insbesondere Hydroxylgruppen, enthaltenden Verbindungen der Komponente (b) mit den organischen, gegebenenfalls modifizierten Polyisocyanaten (a) stark beschleunigen.

Als Katalysator (d) geeignet sind stark basische Amine beispielsweise Amidine, wie 2,3-Dimethyl-3,4,5,6-tetrahydropyrimidin, tertiäre Amine, wie Triethylamin, Tributylamin, Dimethylcyclohexylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin-1,6, Pentamethyl-diethylentriamin, Tetramethyldiaminoethylether, Bis(2-dimethylaminoethyl)ether, Bis-(dimethylaminopropyl)-harnstoff, Dimethylpiperazin, 1,2-Dimethyl-imidazol, 1-Aza-bicyclo-(3,3,0)-octan und vorzugsweise 1,4-Diaza-bi-cyclo-(2,2,2)-octan, und Alkanolaminverbindungen, wie Triethanolamin, Triisopropanolamin, N-Methyl- und N-Ethyl-diethanolamin, N,N-Dimethylaminoethoxyethanol, N,N,N'-Trimethylaminoethyl-ethamolamin und Dimethylethanolamin.

Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen.

Falls in den Hartschaumstoff Isocyanuratgruppen eingebaut werden sollen, werden spezielle Katalysatoren benötigt. Als Isocyanurat-Katalysatoren werden üblicherweise Metallcarboxylate, insbesondere Kaliumacetat und dessen Lösungen, eingesetzt. Die Katalysatoren können, je nach Erfordernis, allein oder in beliebigen Mischungen untereinander eingesetzt werden.

Vorzugsweise verwendet werden 0,001 bis 7 Gew.-%, insbesondere 0,05 bis 5 Gew.-%, Katalysator bzw. Katalysatorkombination, bezogen auf das Gewicht der Komponente (b).
e) Der Reaktionsmischung zur Herstellung der Polyurethan-Hartschaumstoffe können gegebenenfalls auch noch Hilfsmittel und/oder Zusatzstoffe (e) einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten, oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), angewandt.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im Einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten (a) und (b), einverleibt, wobei jedoch der Gehalt an Matten, Vliesen und Geweben aus natürlichen und synthetischen Fasern Werte bis 80 Gew.-% erreichen kann.

Als Flammschutzmittel können organische Phosphorsäure- und oder Phosphonsäureester zur Anwendung kommen. Vorzugsweise werden gegenüber Isocyanatgruppen nicht reaktive Verbindungen eingesetzt. Auch Chlor enthaltende Phosphorsäureester gehören zu den bevorzugten Verbindungen. Geeignete Flammschutzmittel sind beispielsweise Tris-(2-chlorpropyl)phosphat, Triethylphosphat, Diphenylkresylphosphat, Diethylethanphosphinat, Trikresylphosphat, Tris-(2-chlorethyl)phosphat, Tris(1,3-dichlorpropyl)phosphat, Tris-(2,3-dibrompropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole.

Daneben können auch Brom enthaltende Flammschutzmittel zum Einsatz kommen. Als Brom enthaltende Flammschutzmittel werden vorzugsweise Verbindungen eingesetzt, die gegenüber der Isocyanatgruppe reaktiv sind. Derartige Verbindungen sind beispielsweise Ester der Tetrabromphthalsäure mit aliphatischen Diolen und Alkoxylierungsprodukte des Dibrombutendiols. Auch Verbindungen, die sich aus der Reihe der bromierten, OH-Gruppen enthaltenden Neopentylverbindungen ableiten, können zur Anwendung kommen.

Außer den bereits genannten halogensubstituierten Phosphaten können auch anorganische oder organische Flammschutzmittel, wie roter Phosphor, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanatpolyadditionsprodukte verwendet werden. Im Allgemeinen hat es sich als zweckmäßig erwiesen, 5 bis 50 Gew.-Teile, vorzugsweise 5 bis 25 Gew.-Teile, der genannten Flammschutzmittel für jeweils 100 Gew.-Teile der Komponente (b) zu verwenden.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 3. Auflage, 1993 zu entnehmen.

Zur Herstellung der Polyurethan-Hartschaumstoffe werden die Polyisocyanate a) und die Polyolkomponente b) in solchen Mengen zur Umsetzung gebracht, dass der Isocyanatindex in einem Bereich zwischen 100 und 150, vorzugsweise zwischen 105 und 140, und besonders bevorzugt zwischen 110 und 130 liegt. Der Isocyanatindex ist das molare Verhältnis von Isocyanatgruppen zu mit Isocyanatgruppen reaktiven Gruppen, multipliziert mit 100.

Bevorzugt werden die erfindungsgemäßen Hartschaumstoffe auf kontinuierlich arbeitenden Doppelbandanlagen hergestellt. Hier werden mit einer Hochdruckmaschine die Polyol- und die Isocyanatkomponente dosiert und in einem Mischkopf vermischt. Dem Polyolgemisch können zuvor mit separaten Pumpen Katalysatoren und/oder Treibmittel zudosiert werden. Das Reaktionsgemisch wird kontinuierlich auf die untere Deckschicht aufgetragen. Die untere Deckschicht mit dem Reaktionsgemisch und die obere Deckschicht laufen in das Doppelband ein. Hier schäumt das Reaktionsgemisch auf und härtet aus. Nach dem Verlassen des Doppelbandes wird der endlose Strang in den gewünschten Abmessungen zerschnitten. Auf diese Weise können Sandwichelemente mit metallischen Deckschichten oder Dämmelemente mit flexiblen Deckschichten hergestellt werden.

Die Ausgangskomponenten werden bei einer Temperatur von 15 bis 90 °C, vorzugsweise von 20 bis 60 °C, insbesondere von 20 bis 45 °C, gemischt. Das Reaktionsgemisch kann mit Hoch- oder Niederdruckdosiermaschinen in geschlossene Stützwerkzeuge gegossen werden. Nach dieser Technologie werden z.B. diskontinuierliche Sandwichelemente gefertigt.

D i e nach dem erfindungsgemäßen Verfahren hergestellten Polyurethan-Hartschaumstoffe weisen eine Dichte von 0,02 bis 0,75 g/cm3, vorzugsweise von 0,025 bis 0,24 g/cm3 und insbesondere von 0,03 bis 0,1 g/cm3 auf. Besonders eignen sie sich als Isolationsmaterial im Bau- und Kühlmöbelsektor, z.B. als Zwischenschicht für Sandwichelemente oder zum Ausschäumen von Kühlschrank- und Kühltruhengehäusen.

Die nach dem erfindungsgemäßen Verfahren hergestellten PUR-Hartschaumstoffe weisen gute Oberflächen mit wenigen Fehlstellen und eine gute Härtung auf. Durch den Einsatz des OH-Gruppen enthaltenden Fettsäureesters b3) und des niedermolekularen Kettenverlängerungs- und/oder Vernetzungsmittels b4) kann die Viskosität der Polyolkomponente b) gesenkt werden. Die niedrige Viskosität der Polyolkomponente b) vereinfacht die Verarbeitung an der Doppelbandanlage.

Die Erfindung soll an den nachfolgenden Beispielen näher erläutert werden.

Die Herstellung der Hartschaumstoffe erfolgte auf einer Doppelbandanlage deren Temperatur auf 40 °C eingestellt wurde.

### Vergleichsbeispiel

Aus
71,5 Gew.-Teilen eines Polyetheralkohols mit einer Hydroxylzahl von 490 mg KOH/g, basierend auf Propylenoxid und einer Mischung aus Sucrose und Glyzerin als Starter,
15 Gew.-Teilen eines Polyetheralkohols mit einer Hydroxylzahl von 390 mg KOH/g, basierend auf Ethylenoxid/Propylenoxid und vicinalem TDA als Starter,
10 Gew.-Teilen Tris-2-Chlorisopropylphosphat,
2 Gew.-Teilen Tegostab^{®} B8496 der Firma Goldschmidt,
0,5 Gew.-Teilen Kaliumacetat in Ethylenglykol 50%ige Lösung und
1 Gew.-Teil Wasser
wurde durch Vermischen eine Polyolkomponente hergestellt.

Diese wurde mit einem Polymer-MDI mit einem NCO-Gehalt von 31,5 Gew.-% (Lupranat^{®} M50 der BASF SE) in Anwesenheit von n-Pentan (7,5 Gew.-Teile), Dimethylcyclohexylamin und Wasser, bei einem Isocyanatindex von 120 umgesetzt. Die Mengen an Dimethylcyclohexylamin und Wasser wurden so ausgewählt, dass die Gelzeit 45 Sekunden betrug und der resultierende Schaum eine Dichte von 36 g/l aufwies.

### Beispiel 1 (nicht anspruchsgemäß)

Aus
46,5 Gew.-Teilen eines Polyetheralkohols mit einer Hydroxylzahl von 490 mgKOH/g, basierend auf Propylenoxid und einer Mischung aus Sucrose und Glyzerin als Starter,
15 Gew.-Teilen eines Polyetheralkohols mit einer Hydroxylzahl von 390 mgKOH/g, basierend auf Ethylenoxid/Propylenoxid und vicinalem TDA als Starter,
10 Gew.-Teilen Tris-2-Chlorisopropylphosphat,
25 Gew.-Teilen Rizinusöl,
2 Gew.-Teilen Tegostab^{®} B8496 der Firma Goldschmidt,
0,5 Gew.-Teilen Kaliumacetat in Ethylenglykol 50%ige Lösung und
1 Gew.-Teil Wasser
wurde durch Vermischen eine Polyolkomponente hergestellt.

Diese wurde mit einem Polymer-MDI mit einem NCO-Gehalt von 31,5 Gew.-% (Lupranat^{®} M50 der BASF SE) in Anwesenheit von n-Pentan (7,5 Gew.-Teile), Dimethylcyclohexylamin und Wasser, bei einem Isocyanatindex von 120 umgesetzt. Die Mengen an Dimethylcyclohexylamin und Wasser wurden so ausgewählt, dass die Gelzeit 45 Sekunden betrug und der resultierende Schaum eine Dichte von 36 g/l aufwies.

### Beispiel 2 (nicht anspruchsgemäß)

Aus
38,5 Gew.-Teilen eines Polyetheralkohols mit einer Hydroxylzahl von 490 mgKOH/g, basierend auf Propylenoxid und Mischung aus Sucrose und Glyzerin als Starter,
15 Gew.-Teilen eines Polyetheralkohols mit einer Hydroxylzahl von 390 mgKOH/g, basierend auf Ethylenoxid/Propylenoxid und vicinalem TDA als Starter,
10 Gew.-Teilen Tris-2-Chlorisopropylphosphat,
25 Gew.-Teilen Rizinusöl,
8 Gew.-Teilen 1,2-Propylenglykol,
2 Gew.-Teilen Tegostab^{®} B8496 der Firma Goldschmidt,
0,5 Gew.-Teilen Kaliumacetat in Ethylenglykol 50%ige Lösung und
1 Gew.-Teil Wasser
wurde durch Vermischen eine Polyolkomponente hergestellt.

Diese wurde mit einem Polymer-MDI mit einem NCO-Gehalt von 31,5 Gew.-% (Lupranat^{®} M50 der BASF SE) in Anwesenheit von n-Pentan (7,5 Gew.-Teile), Dimethylcyclohexylamin und Wasser, bei einem Isocyanatindex von 120 umgesetzt. Die Mengen an Dimethylcyclohexylamin und Wasser wurden so ausgewählt, dass die Gelzeit 45 Sekunden betrug und der resultierende Schaum eine Dichte von 36 g/l aufwies.

Die Härtung wurde mit dem Bolzentest ermittelt. Dazu wird 3, 4, 5 und 6 Minuten nach Vermischung der Komponenten in einem Polystyrol-Becher ein Stahlbolzen mit einer Kugelkalotte von 10 mm Radius mit einer Zug/Druckprüfmaschine 10 mm tief in den entstandenen Schaumpilz eingedrückt. Die erforderliche Maximalkraft in N ist ein Maß für die Härtung des Schaumstoffs. Angegeben sind jeweils die gemessen Maximalkräfte nach 3, 4, 5 und 6 Minuten und die Summe der Härtung nach 3, 4, 5 und 6 Minuten.

Für die Haftungsversuche wurden Sandwichelemente (200×200×80 mm) mit metallischen Deckschichten im Labor in einer geschlossenen beheizten Form geschäumt. Die Temperatur der Form betrug 40 °C, die Gesamtdichte des Schaums betrug 36 g/l. Nach Aushärtung des Systems wurden Prüfkörper der Abmessung 100×100×80 mm gesägt und die Haftung des Schaums zur Deckschicht nach DIN EN ISO 527-1 / DIN 53292 bestimmt.

Die Häufigkeit von Oberflächendefekten wurde durch eine optische Methode quantitativ bestimmt. Dafür wurde in einem Abstand von einem Millimeter zur unteren Deckschicht, das heißt der Deckschicht, auf der die Polyurethan-Reaktionslösung im Doppelbandverfahren aufgetragen wurde, eine Ebene in eine Schaumprobe gelegt und überstehendes Material abgetrennt.

Bei der quantitativen Beurteilung der Oberfläche wurde die Oberfläche des Schaums von rechts und danach von links beleuchtet und jeweils fotografiert. Die Bilder wurden überlagert und mit einer Bildanalyse-Software analysiert. Die Fehlstellen an der Oberfläche erscheinen dabei als schwarze Flächen. Der Prozentsatz der schwarzen Flächen an der gesamten Oberfläche ist ein Maß für die Häufigkeit von Oberflächendefekten des Schaums.

Des Weiteren erfolgte eine zusätzliche qualitative Beurteilung der Oberflächenbeschaffenheit der Schäume, wobei die Deckschicht von einer 1m×2m großen Schaumprobe entfernt wurde und die Oberfläche visuell beurteilt wurde.

Die Ergebnisse sind in der Tabelle 1 dargestellt:

**Tabelle 1**

| | Vergleichsbeispiel | Beispiel 1 * | Beispiel 2 * |
|---|---|---|---|
| Härtung nach 3 min [N] | 72 | 62 | 68 |
| Härtung nach 4 min [N] | 78 | 75 | 80 |
| Härtung nach 5 min [N] | 85 | 83 | 91 |
| Härtung nach 6 min [N] | 91 | 91 | 98 |
| Summe der Härtung nach 3-6 min [N] | 326 | 311 | 337 |
| | | | |
| Zugfestigkeit [N/mm²] | 0,25 | 0,28 | 0,34 |
| | | | |
| Oberfläche(qualitativ) | Schlecht | Gut | Sehr gut |
| Oberfläche(quantitativ) [%] | 5,5 | 1,7 | 0,9 |
| | | | |
| Viskosität von Polyolkomponente bei 20 °C [mPas] | 8370 | 3750 | 1920 |

| | | | |
|---|---|---|---|
| *) nicht Anspruchsgemäß | | | |

Die Ergebnisse in der Tabelle 1 zeigen, dass durch das Verfahren die Oberflächeneigenschaften der Schaumstoffe und die Haftung deutlich verbessert sind. Darüber hinaus verringert sich die Viskosität der Polyolkomponente erheblich, so dass die Verarbeitung, bedingt durch die gute Fließfähigkeit und die ebenfalls zufriedenstellende Aushärtung, vereinfacht ist.

## Patentansprüche

1. Verfahren zur Herstellung von Polyurethan-Hartschaumstoffen durch Umsetzung von
a) organischen Polyisocyanaten mit
b) Verbindungen mit mindestens zwei mit Isocycanatgruppen reaktiven Wasserstoffatomen in Anwesenheit von
c) Treibmitteln,
d) Katalysatoren, sowie gegebenenfalls
e) Hilfsmitteln und Zusatzstoffen,
**dadurch gekennzeichnet, dass** als Komponente b) ein Gemisch aus
b1) 20 bis 70 Gew.-Teilen eines oder mehrerer hochfunktioneller Polyetheralkohole mit Funktionalitäten von 3,7 bis 5,2 und einer Hydroxylzahl von 370 bis 500 mg KOH/g,
b2) 5 bis 30 Gew.-Teilen eines oder mehrerer Polyetheralkohole auf Basis aromatischer Amine mit Funktionalitäten von 3 bis 4 und einer Hydroxylzahl von 150 bis 500 mg KOH/g,
b3) 5 bis 20 Gew.-Teilen eines OH-Gruppen enthaltenden Fettsäureesters und
b4) 1 bis 20 Gew.-Teilen eines oder mehrerer niedermolekularer Kettenverlängerungs- und/oder Vernetzungsmittel mit Funktionalitäten von 2 bis 3 und einem Molekulargewicht Mw von < 400 g/mol
mit einer mittleren Hydroxylzahl von 400 bis 550 mg KOH/g eingesetzt wird.

2. Verfahren nach Anspruch 1, **dadurch gekennzeichnet, dass** 2 bis 10 Gew.-Teile des niedermolekularen Kettenverlängerungs- und/oder Vernetzungsmittels b4) eingesetzt werden.

3. Verfahren nach Anspruch 1 oder 2, **dadurch gekennzeichnet, dass** als Ester aus Glyzerin und OH-Gruppen enthaltenden Fettsäuren Rizinusöl eingesetzt wird.

4. Verfahren nach einem der Ansprüche 1 bis 3, **dadurch gekennzeichnet, dass** als niedermolekulares Kettenverlängerungsmittel b4) 1,2-Propylenglykol eingesetzt wird.

5. Verfahren nach einem der Ansprüche 1 bis 4, **dadurch gekennzeichnet, dass** die Umsetzung bei einem Isocyanatindex von 100 bis 150 durchgeführt wird.

6. Verfahren nach einem der Ansprüche 1 bis 5, **dadurch gekennzeichnet, dass** als Treibmittel n-Pentan und/oder iso-Pentan eingesetzt wird.

7. Polyurethan-Hartschaumstoffe, hergestellt nach dem Verfahren gemäß Anspruch 1.

## Claims

1. A process for producing rigid polyurethane foams by reacting
a) organic polyisocyanates with
b) compounds having at least two hydrogen atoms which are reactive toward isocyanate groups in the presence of
c) blowing agents,
d) catalysts and, optionally,
e) auxiliaries and additives,
wherein a mixture of
b1) from 20 to 70 parts by weight of one or more high-functionality polyether alcohols having functionalities of from 3.7 to 5.2 and a hydroxyl number of from 370 to 500 mg KOH/g,
b2) from 5 to 30 parts by weight of one or more polyether alcohols based on aromatic amines and having functionalities of from 3 to 4 and a hydroxyl number of from 150 to 500 mg KOH/g,
b3) from 5 to 20 parts by weight of an OH-comprising fatty acid ester and
b4) from 1 to 20 parts by weight of one or more low molecular weight chain extenders and/or crosslinkers having functionalities of from 2 to 3 and a molecular weight M_{w} of < 400 g/mol having an average hydroxyl number of from 400 to 550 mg KOH/g is used as component b).

2. The process according to claim 1, wherein from 2 to 10 parts by weight of the low molecular weight chain extender and/or crosslinker b4) are used.

3. The process according to claim 1 or 2, wherein castor oil is used as ester of glycerol and OH-comprising fatty acids.

4. The process according to any of claims 1 to 3, wherein 1,2-propylene glycol is used as low molecular weight chain extender b4).

5. The process according to any of claims 1 to 4, wherein the reaction is carried out at an isocyanate index of from 100 to 150.

6. The process according to any of claims 1 to 5, wherein n-pentane and/or isopentane are used as blowing agent.

7. A rigid polyurethane foam produced by the process according to claim 1.

## Revendications

1. Procédé pour la production de mousses rigides de polyuréthane par mise en réaction de
a) polyisocyanates organiques avec
b) des composés comportant au moins deux atomes d'hydrogène réactifs avec des groupes isocyanate, en présence
c) d'agents d'expansion,
d) de catalyseurs ainsi qu'éventuellement
e) d'adjuvants et d'additifs,
**caractérisé en ce qu'**on utilise comme composant b) un mélange de
b1) 20 à 70 parties en poids d'un ou de plusieurs polyétheralcools hautement fonctionnels ayant des fonctionnalités de 3,7 à 5,2 et un indice de groupes hydroxy de 370 à 500 mg de KOH/g,
b2) 5 à 30 parties en poids d'un ou de plusieurs polyétheralcools à base d'amines aromatiques, ayant des fonctionnalités de 3 à 4 et un indice de groupes hydroxy de 150 à 500 mg de KOH/g,
b3) 5 à 20 parties en poids d'un ester d'acide gras contenant des groupes OH et
b4) 1 à 20 parties en poids d'un ou de plusieurs agents de prolongement de chaîne et/ou de réticulation, de faible masse moléculaire, ayant des fonctionnalités de 2 à 3 et une masse moléculaire Mw de < 400 g/mole
ayant un indice moyen de groupes hydroxy de 400 à 550 mg de KOH/g.

2. Procédé selon la revendication 1, **caractérisé en ce qu'**on utilise 2 à 10 parties en poids de l'agent de prolongement de chaîne et/ou de réticulation, de faible masse moléculaire, b4).

3. Procédé selon la revendication 1 ou 2, **caractérisé en ce qu'**on utilise comme ester de glycérol et d'acides gras contenant des groupes OH l'huile de ricin.

4. Procédé selon l'une quelconque des revendications 1 à 3, **caractérisé en ce qu'**on utilise comme agent de prolongement de chaîne, de faible masse moléculaire, b4) le 1,2-propylèneglycol.

5. Procédé selon l'une quelconque des revendications 1 à 4, **caractérisé en ce qu'**on effectue la réaction à un indice d'isocyanate de 100 à 150.

6. Procédé selon l'une quelconque des revendications 1 à 5, **caractérisé en ce qu'**on utilise comme agent d'expansion le n-pentane et/ou l'isopentane.

7. Mousses rigides de polyuréthane, produites conformément au procédé selon la revendication 1.
